(19)

Europäisches Patentamt

European Patent Office

Office européen des brevets

(11) **EP 4 299 602 A1**

(12) **EUROPEAN PATENT APPLICATION**
published in accordance with Art. 153(4) EPC

(43) Date of publication:
**03.01.2024 Bulletin 2024/01**

(21) Application number: **22759263.1**

(22) Date of filing: **31.01.2022**

(51) International Patent Classification (IPC):
**C08F 8/00** (2006.01)    **C08F 214/26** (2006.01)
**H01B 7/02** (2006.01)

(52) Cooperative Patent Classification (CPC):
**C08F 8/00; C08F 214/26; H01B 7/02**

(86) International application number:
**PCT/JP2022/003636**

(87) International publication number:
**WO 2022/181222 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021   JP 2021031088
30.09.2021   JP 2021162115**

(71) Applicant: **DAIKIN INDUSTRIES, LTD.
Osaka-Shi, Osaka 530-0001 (JP)**

(72) Inventors:
• **ISAKA, Tadaharu**
  **Osaka-shi, Osaka 530-0001 (JP)**
• **ZENKE, Yumi**
  **Osaka-shi, Osaka 530-0001 (JP)**
• **YAMAMOTO, Yukari**
  **Osaka-shi, Osaka 530-0001 (JP)**
• **TSUDA, Hayato**
  **Osaka-shi, Osaka 530-0001 (JP)**
• **SEKIGUCHI, Takashi**
  **Osaka-shi, Osaka 530-0001 (JP)**

(74) Representative: **Hoffmann Eitle
Patent- und Rechtsanwälte PartmbB
Arabellastraße 30
81925 München (DE)**

(54) **COPOLYMER, MOLDED BODY, INJECTION MOLDED BODY, AND COATED ELECTRICAL WIRE**

(57)    There is provided a copolymer containing tetrafluoroethylene unit and perfluoro(propyl vinyl ether) unit, wherein the copolymer has a content of perfluoro(propyl vinyl ether) unit of 2.26 to 2.75 mol% with respect to the whole of the monomer units, a melt flow rate at 372°C of 4.0 to 11.0 g/10 min, and the number of functional groups of 50 or less per $10^6$ main-chain carbon atoms.

**EP 4 299 602 A1**

**Description**

TECHNICAL FIELD

The present disclosure relates to a copolymer, a formed article, an injection molded article, and a coated electric wire.

BACKGROUND ART

Patent Document 1 describes a forming material for an ozone-resistant article, comprising a copolymer (A) and having a melt flow rate of 0.1 to 50 g/10 min, wherein the copolymer (A) comprises tetrafluoroethylene and perfluorovinylether and has 3.5% by mass or higher of a perfluorovinylether unit, a melting point of 295°C or higher, and 50 or less unstable terminal groups per $1 \times 10^6$ carbon atoms in the copolymer (A).

RELATED ART

PATENT DOCUMENT

Patent Document 1: International Publication No. WO 2003/048214

SUMMARY OF THE INVENTION

PROBLEM TO BE SOLVED BY THE INVENTION

An object of the present disclosure is to provide a copolymer that is capable of providing a visually attractive injection molded article by being molded by injection molding, that hardly corrodes a metal mold to be used for molding and a core wire coated therewith, that is capable of forming an extremely thick coating layer having a uniform thickness on a core wire having an extremely large diameter by extrusion forming, and that is capable of providing a formed article which has an extremely small haze value and extremely good abrasion resistance, which has excellent 100°C mechanical strength, carbon dioxide low permeability, chemical solution low permeability, 110°C high-temperature rigidity, and non-stickiness, which is also hardly damaged or deteriorated even when repeatedly receiving tensile load, which has sufficient water vapor low permeability, and which hardly makes fluorine ions to dissolve out in an electrolytic solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 2.26 to 2.75 mol% with respect to the whole of the monomer units, a melt flow rate at 372°C of 4.0 to 11.0 g/10 min, and the number of functional groups of 50 or less per $10^6$ main-chain carbon atoms.

The copolymer of the present disclosure preferably has a melt flow rate at 372°C of 5.0 to 10.0 g/10 min.

According to the present disclosure, an injection molded article comprising the above copolymer is further provided.

According to the present disclosure, a coated electric wire having a coating layer comprising the above copolymer is further provided.

According to the present disclosure, a formed article comprising the copolymer, wherein the formed article is a filter housing, a film, a bottle, an electric wire coating, or a tube is further provided.

EFFECTS OF INVENTION

According to the present disclosure, there can provided a copolymer that is capable of providing a visually attractive injection molded article by being molded by injection molding, that hardly corrodes a metal mold to be used for molding and a core wire coated therewith, that is capable of forming an extremely thick coating layer having a uniform thickness on a core wire having an extremely large diameter by extrusion forming, and that is capable of providing a formed article which has an extremely small haze value and extremely good abrasion resistance, which has excellent 100°C mechanical strength, carbon dioxide low permeability, chemical solution low permeability, 110°C high-temperature rigidity, and non-stickiness, which is also hardly damaged or deteriorated even when repeatedly receiving tensile load, which has sufficient water vapor low permeability, and which hardly makes fluorine ions to dissolve out in an electrolytic solution.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and perfluoro(propyl vinyl ether) (PPVE) unit.

The copolymer (PFA) containing the TFE unit and the PPVE unit is used as a material for forming a filter housing used in filtration of a fluid such as a chemical solution. The pressure of a fluid traveling in a filter housing frequently varies, for example, when the feeding of the fluid is started, when the feeding of the fluid is stopped, and when the feeding pressure of the fluid is changed. When subjecting a high-pressure fluid or a high-temperature fluid to filtration, the high-pressure fluid or the high-temperature fluid travels through the filter housing. Accordingly, a material having excellent durability against repetitive stress and mechanical strength at high temperatures is required as a material for constituting the filter housing. At the same time, a highly transparent material is preferably used as the material constituting the filter housing such that the defoaming operation can be performed while visually checking the presence or absence of air bubbles in the filter housing. Moreover, a material that has sufficient water vapor low permeability and excellent chemical solution low permeability and has suppressed fluorine ions dissolving out from the material itself needs to be used so as not to contaminate the chemical solution flowing in the filter housing with water or fluoride ions.

In Patent Document 1, the forming material for an ozone-resistant article having the above characteristics is described as being a molding material in which the physical properties and moldability of fluororesin are not impaired and which has excellent ozone resistance while maintaining the chemical resistance, heat resistance, and mechanical property of fluororesin. However, there is a need for a copolymer capable of providing a formed article that has sufficient mechanical strength at high temperatures, sufficient water vapor low permeability, and sufficient chemical solution low permeability, that hardly makes fluorine ions to dissolve out, and that has a smaller haze value and is less likely to be damaged even when repeatedly receiving tensile load than the forming material described in Patent Document 1.

Moreover, to produce the filter housing in a high productivity, the material is preferably formed using injection molding. While some conventional materials themselves have excellent transparency, white turbidness is observed and surface roughness is generated on the obtained injection molded, thus being problematic in that no filter housing having excellent transparency can be obtained. Accordingly, as a material for forming a filter housing, there is a need for a material that not only has a small haze value itself but also has excellent moldability and does not lose excellent transparency after injection molding.

It has been found that by suitably regulating the content of PPVE unit, the melt flow rate (MFR), and the number of functional groups of the copolymer containing TFE unit and PPVE unit, the moldability of the copolymer is significantly improved and, at the same time, a metal mold that is used in molding is hardly corroded. Besides, it has been also found that by using such a copolymer, a formed article is obtained that has an extremely small haze value, has extremely good abrasion resistance, has excellent 100°C mechanical strength, carbon dioxide low permeability, chemical solution low permeability, 110°C high-temperature rigidity, and non-stickiness, is also hardly damaged or deteriorated even when repeatedly receiving tensile load, has sufficient water vapor low permeability, and hardly makes fluorine ions to dissolve out in an electrolytic solution.

Moreover, by extrusion forming, the copolymer of the present disclosure can be formed into an extremely thick coating layer having a uniform thickness on a core wire having an extremely large diameter. In addition, the obtained coating layer hardly corrodes the core wire. Thus, the copolymer of the present disclosure can be utilized not only as a material for a filter housing, but also in a broad range of applications such as an electric wire coating.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is, with respect to the whole of the monomer units, 2.26 to 2.75 mol%, preferably 2.28 mol% or higher, more preferably 2.30 mol% or higher, still more preferably 2.32 mol% or higher, especially preferably 2.34 mol% or higher, and most preferably 2.38 mol% or higher, and is preferably 2.71 mol% or lower, more preferably 2.68 mol% or lower, still more preferably 2.65 mol% or lower, especially preferably 2.62 mol% or lower, and most preferably 2.59 mol% or lower. Due to that the content of the PPVE unit of the copolymer is in the above range, a formed article can be obtained that has an extremely small haze value, that has extremely good abrasion resistance, that has excellent 100°C mechanical strength, carbon dioxide low permeability, chemical solution low permeability, 110°C high-temperature rigidity, and non-stickiness, that is also hardly damaged or deteriorated by repetitive load, and that has sufficient water vapor low permeability. An excessively small content of the PPVE unit of the copolymer results in an increased haze value or poor abrasion resistance. An excessively high content of the PPVE unit of the copolymer fails to provide a formed article having sufficient water vapor low permeability, a formed article having sufficient carbon dioxide low permeability, a formed article having sufficient 110°C high-temperature rigidity, or a formed article having excellent durability against repetitive tensile load.

The content of TFE unit of the copolymer is, with respect to the whole of the monomer units, preferably 97.25 to 97.74 mol%, more preferably 97.29 mol% or higher, still more preferably 97.32 mol% or higher, further still more preferably 97.35 mol% or higher, especially preferably 97.38 mol% or higher, and most preferably 97.41 mol% or higher, and is more preferably 97.72 mol% or lower, still more preferably 97.70 mol% or lower, further still more preferably 97.68 mol% or lower, especially preferably 97.66 mol% or lower, and most preferably 97.62 mol% or lower. An excessively large content of TFE unit of the copolymer possibly results in a large haze value. An excessively small content of TFE unit of the copolymer possibly fails to provide a formed article having sufficient water vapor low permeability.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 0.45 mol%, more preferably 0.01 to 0.30 mol%, and still more preferably 0.05 to 0.20 mol%.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 4.0 to 11.0 g/10 min. The MFR of the copolymer is preferably 4.1 g/10 min or higher, more preferably 4.2 g/10 min or higher, still more preferably 4.3 g/10 min or higher, further still more preferably 4.5 g/10 min or higher, especially preferably 5.0 g / 10 min or higher, further especially preferably 6.0 g/10 min or higher, and most preferably 7.0 g/10 min or higher, and is preferably 10.9 g/10 min or less, more preferably 10.5 g/10 min or lower, more preferably 10.4 g/10 min or lower, still more preferably 10.0 g/10 min or lower, especially preferably 9.5 g/10 min or lower, and most preferably 9.0 g/10 min or lower. Due to that the MFR of the copolymer is in the above range, the moldability of the copolymer is improved, and also a formed article can be obtained that has a small haze value, that is hardly damaged even when repeatedly receiving tensile load, that has excellent abrasion resistance, 100°C mechanical strength, carbon dioxide low permeability, chemical solution low permeability, and 110°C high-temperature rigidity, and that has sufficient water vapor low permeability.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

The number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less and most preferably 6 or less. Due to that the number of functional groups of the copolymer is in the above range, a metal mold is hardly corroded even when molding the copolymer by filling the metal mold with the copolymer, and a core wire is hardly corroded even when the copolymer is used as an electric wire coating. Further, there can be obtained a formed article that has excellent non-stickiness, carbon dioxide low permeability, and chemical solution low permeability, and that hardly makes fluorine ions to dissolve out in an electrolytic solution. In particular, by suitably regulating the content of the PPVE unit, the melt flow rate (MFR), and the number of functional groups of the copolymer containing the TFE unit and the PPVE unit, a formed article exhibiting excellent low permeability to various chemical solutions such as dimethyl carbonate and ethyl acetate can be obtained.

For identification of the kind of the functional groups and measurement of the number of the functional groups, infrared spectroscopy can be used.

The number of the functional groups is measured, specifically, by the following method. First, the copolymer is molded by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the copolymer is calculated according to the following formula (A).

$$N = I \times K/t \cdots (A)$$

I: absorbance

K: correction factor

t: thickness of film (mm)

For reference, the absorption frequency, the molar absorption coefficient and the correction factor for some functional groups are shown in Table 1. Then, the molar absorption coefficients are those determined from FT-IR measurement data of low molecular model compounds.

[Table 1]

Table 1

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH_2$, -OH | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF=CF_2$ | 1795 | 635 | 366 | $CF_2=CF_2$ |

Absorption frequencies of $-CH_2CF_2H$, $-CH_2COF$, $-CH_2COOH$, $-CH_2COOCH_3$ and $-CH_2CONH_2$ are lower by a few tens of kaysers ($cm^{-1}$) than those of $-CF_2H$, -COF, -COOH free and -COOH bonded, $-COOCH_3$ and $-CONH_2$ shown in the Table, respectively.

For example, the number of the functional group -COF is the total of the number of a functional group determined from an absorption peak having an absorption frequency of 1,883 $cm^{-1}$ derived from $-CF_2COF$ and the number of a functional group determined from an absorption peak having an absorption frequency of 1,840 $cm^{-1}$ derived from $-CH_2COF$.

The functional groups are ones present on main chain terminals or side chain terminals of the copolymer, and ones present in the main chain or the side chains. The number of the functional groups may be the total of numbers of $-CF=CF_2$, $-CF_2H$, -COF, -COOH, $-COOCH_3$, $-CONH_2$ and $-CH_2OH$.

The functional groups are introduced to the copolymer by, for example, a chain transfer agent or a polymerization initiator used for production of the copolymer. For example, in the case of using an alcohol as the chain transfer agent, or a peroxide having a structure of $-CH_2OH$ as the polymerization initiator, $-CH_2OH$ is introduced on the main chain terminals of the copolymer. Alternatively, the functional group is introduced on the side chain terminal of the copolymer by polymerizing a monomer having the functional group.

The copolymer satisfying the above range regarding the number of functional groups can be obtained by subjecting the copolymer to a fluorination treatment. That is, the copolymer of the present disclosure is preferably one which is subjected to the fluorination treatment. Further, the copolymer of the present disclosure preferably has $-CF_3$ terminal groups.

The melting point of the copolymer is preferably 285 to 310°C, more preferably 290°C or higher, still more preferably 294°C or higher, especially preferably 296°C or higher, and most preferably 298°C or higher, and is more preferably 305°C or lower. Due to that the melting point is in the above range, there can be obtained the copolymer giving formed articles better in mechanical strength particularly at high temperatures.

In the present disclosure, the melting point can be measured by using a differential scanning calorimeter [DSC].

The copolymer of the present disclosure preferably has a haze value of 7.5% or less. Due to that the haze value is in the above range, for example, when the copolymer of the present disclosure is used to obtain a formed article such as a pipe, a joint, a bottle, a flow meter or the like, it becomes very easy to observe the inside of the formed article by visual observation, a camera or the like, and thus it is very easy to check the flow rate and the residual quantity of the contents. The haze value can be lowered by regulating the content of the PPVE unit and the melt flow rate (MFR) of the copolymer. In the present disclosure, the haze value can be measured according to JIS K 7136.

The copolymer of the present disclosure preferably has a tensile strength at 100°C of 20.0 MPa or higher, more preferably 20.5 MPa or higher, and still more preferably 22.0 MPa or higher. Due to that the tensile strength at 100°C is in the above range, even when the obtained formed article is used at high temperatures, deformation is suppressed, and the service life of the formed article can be extended. The tensile strength at 100°C can be raised by regulating the content of the PPVE unit and the melt flow rate (MFR) of the copolymer. In the present disclosure, tensile strength at 100°C can be measured according to ASTM D638.

The water vapor permeability of the copolymer is preferably 18.0 g·cm/m$^2$ or lower, more preferably 17.5 g·cm/m$^2$ or lower, and still more preferably 17.0 g·cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has sufficient water vapor low permeability. Accordingly, for example, a formed article such as a filter housing obtained using the copolymer of the present disclosure can suitably be used to transfer a chemical solution that should not be mixed with water such as water vapor in outside air.

In the present disclosure, the water vapor permeability can be measured under the condition of a temperature of 95°C and for 30 days. Specific measurement of the water vapor permeability can be carried out by a method described in Examples.

The carbon dioxide permeability coefficient of the copolymer is preferably 2,000 cm$^3$·mm/ (m$^2$·24 h·atm) or less. Due to that the content of the PPVE unit, the melt flow rate (MFR), and the number of functional groups of the copolymer containing the TFE unit and the PPVE unit are suitably regulated, the copolymer of the present disclosure has excellent carbon dioxide low permeability. Hence, by using the copolymer of the present disclosure, there can be obtained a formed article such as a bottle that can reliably suppress permeation of carbon dioxide from the outside and maintain the quality of a chemical solution contained therein for a long term.

In the present disclosure, the carbon dioxide permeability coefficient can be measured under the condition having a test temperature of 70°C and a test humidity of 0% RH. Specific measurement of the carbon dioxide permeability coefficient can be carried out by a method described in Examples.

The electrolytic solution permeability of the copolymer is preferably 8.5 g·cm/m$^2$ or lower, and more preferably 8.2 g·cm/m$^2$ or lower. Do to that the content of the PPVE unit, the melt flow rate (MFR), and the number of functional groups of the copolymer containing the TFE unit and the PPVE unit are suitably regulated, the copolymer of the present disclosure has excellent low electrolytic solution permeability. That is, by using the copolymer of the present disclosure, a formed article that hardly makes a chemical solution such as an electrolytic solution to permeate can be obtained.

In the present disclosure, the electrolytic solution permeability can be measured under the condition of a temperature of 60°C and for 30 days. Specific measurement of the electrolytic solution permeability can be carried out by a method described in Examples.

The ethyl acetate permeability of the copolymer is preferably 6.9 g·cm/m$^2$ or lower, and more preferably 6.6 g·cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has excellent low ethyl acetate permeability. That is, by using the copolymer of the present disclosure, a formed article that hardly makes a chemical solution such as ethyl acetate to permeate can be obtained.

In the present disclosure, the ethyl acetate permeability can be measured under the condition having a temperature of 60°C and for 45 days. Specific measurement of the ethyl acetate permeability can be carried out by a method described in Examples.

In the copolymer of the present disclosure, the amount of fluorine ions dissolving out therefrom detected by an electrolytic solution immersion test is, in terms of mass, preferably 1.0 ppm or lower, more preferably 0.8 ppm or lower and still more preferably 0.7 ppm or lower. Due to that the amount of fluorine ions dissolving out is in the above range, the generation of gasses such as HF in a non-aqueous electrolyte battery can be more suppressed, and the deterioration and the shortening of the service life of the battery performance of a non-aqueous electrolyte battery can be more suppressed.

In the present disclosure, the electrolytic solution immersion test can be carried out by preparing a test piece of the copolymer having a weight corresponding to that of 10 sheets of formed articles (15 mm × 15 mm × 0.2 mm) of the copolymer, and putting, in a thermostatic chamber at 80°C, a glass-made sample bottle in which the test piece and 2 g of dimethyl carbonate (DMC) have been charged and allowing the resultant to stand for 144 hours.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; hydrofluroalkanes such as $CF_3CFHCFHCF_2CF_3$, $CF_2HCF_2CF_2CF_2H$ and $CF_3CF_2CF_2CF_2CF_2CF_2H$; hydrofluoroethers such as $CH_3OC_2F_5$, $CH_3OC_3F_5$ $CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of the suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and a conventionally known method such as a strand cut method, a hot cut method, an underwater cut method, or a sheet cut method can be adopted. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as - COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, - CH$_2$OH, -COF, -CF=CF$_2$, -CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, and is suitably used as a forming material. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

Molded articles may be obtained by forming the copolymer of the present disclosure or the above composition.

A method of forming the copolymer or the composition is not limited, and includes injection molding, extrusion forming, compression molding, blow molding, transfer molding, rotomolding and rotolining molding. As the forming method, among these, preferable are extrusion forming, compression molding, injection molding and transfer molding; from the viewpoint of being able to produce forming articles in a high productivity, more preferable are injection molding, extrusion forming and transfer molding, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable. By forming the copolymer of the present disclosure by injection molding, an injection molded article having an attractive appearance can be obtained without corroding the metal mold to be used for molding.

The formed articles containing the copolymer of the present disclosure may be, for example, nuts, bolts, joints, films, bottles, gaskets, electric wire coatings, tubes, hoses pipes, valves, sheets, seals, packings, tanks, rollers, containers, cocks, connectors, filter housings, filter cages, flow meters, pumps, wafer carriers, and wafer boxes.

The copolymer of the present disclosure, the above composition and the above formed articles can be used, for example, in the following applications.

Food packaging films, and members for liquid transfer for food production apparatuses, such as lining materials of fluid transfer lines, packings, sealing materials and sheets, used in food production processes;
chemical stoppers and packaging films for chemicals, and members for chemical solution transfer, such as lining materials of liquid transfer lines, packings, sealing materials and sheets, used in chemical production processes;
inner surface lining materials of chemical solution tanks and piping of chemical plants and semiconductor factories;
members for fuel transfer, such as O (square) rings, tubes, packings, valve stem materials, hoses and sealing materials, used in fuel systems and peripheral equipment of automobiles, and such as hoses and sealing materials, used in ATs of automobiles;
members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;
members for chemical transfer for semiconductor production apparatuses, such as O (square) rings, tubes, packings, valve stem materials, hoses, sealing materials, rolls, gaskets, diaphragms and joints;
members for coating and inks, such as coating rolls, hoses and tubes, for coating facilities, and containers for inks;
members for food and beverage transfer, such as tubes, hoses, belts, packings and joints for food and beverage, food packaging materials, and members for glass cooking appliances;
members for waste liquid transport, such as tubes and hoses for waste transport;
members for high-temperature liquid transport, such as tubes and hoses for high-temperature liquid transport;
members for steam piping, such as tubes and hoses for steam piping;
corrosionproof tapes for piping, such as tapes wound on piping of decks and the like of ships;
various coating materials, such as electric wire coating materials, optical fiber coating materials, and transparent front side coating materials installed on the light incident side and back side lining materials of photoelectromotive elements of solar cells;
diaphragms and sliding members such as various types of packings of diaphragm pumps;
films for agriculture, and weathering covers for various kinds of roof materials, sidewalls and the like;
interior materials used in the building field, and coating materials for glasses such as non-flammable fireproof safety glasses; and
lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed article containing the copolymer of the present disclosure has an extremely small haze value, has extremely good abrasion resistance, has excellent 100°C mechanical strength, carbon dioxide low permeability, chemical solution low permeability, 110°C high-temperature rigidity, and non-stickiness, is also hardly damaged or deteriorated even when repeatedly receiving tensile load, has sufficient water vapor low permeability, hardly makes fluorine ions to dissolve out in an electrolytic solution, the formed article can suitably be utilized as a nut, a bolt, a joint, a packing, a valve, a cock, a connector, a filter housing, a filter cage, a flow meter, a pump, or the like. Due to that the filter housing containing the copolymer of the present disclosure has an extremely small haze value, the filter housing has excellent inside-visibility, and, for example, a defoaming operation can be easily performed. Also, the formed article can suitably be utilized as a piping member (in particular, a joint) used to transfer a chemical solution or as a flow meter body having a flow path for a chemical solution in a flow meter. The piping member and the flow meter body of the present disclosure have an extremely small haze value, have extremely good abrasion resistance, have excellent 100°C mechanical strength, carbon dioxide low permeability, chemical solution low permeability, 110°C high-temperature rigidity, and non-stickiness, are also hardly damaged or deteriorated even when repeatedly receiving tensile load, have sufficient water vapor low permeability, and hardly make fluorine ions to dissolve out in an electrolytic solution. Accordingly, the piping member and the flow meter body of the present disclosure have excellent inside-visibility and, especially in the flow meter body, enable the float inside to be easily observed by visual observation, a camera or the like and can suitably be used in measuring the flow rate of a chemical solution at approximately 100°C, and are hardly damaged even when repeatedly receiving stress resulting from starting and stopping the circulation of a chemical solution or changing the flow rate. Moreover, the piping member and the flow meter body of the present disclosure can be produced by injection molding without corroding a metal mold to be used for forming, and has an attractive appearance.

Due to that the formed article containing the copolymer of the present disclosure can be easily produced by injection molding without corroding a metal mold, has an extremely small haze value, has extremely good abrasion resistance, has excellent 100°C mechanical strength, carbon dioxide low permeability, chemical solution low permeability, 110°C high-temperature rigidity, and non-stickiness, is also hardly damaged or deteriorated even when repeatedly receiving tensile load, has sufficient water vapor low permeability, and hardly makes fluorine ions to dissolve out in an electrolytic solution, the formed article can suitably be utilized as a member to be compressed such as a gasket or a packing. The member to be compressed of the present disclosure may be a gasket or a packing. The gasket or packing of the present disclosure can be inexpensively produced by injection molding without corroding a metal mold, is hardly damaged even when installed in a place where opening and closing are repeated highly frequently, and has excellent 100°C mechanical strength. Due to that the member to be compressed of the present disclosure has excellent water vapor low permeability, is hardly damaged even when repeatedly receiving stress, the member can suitably be used as a piping member for transferring a chemical solution that should not be mixed with water such as water vapor in outside air.

The size and shape of the member to be compressed of the present disclosure may suitably be set according to applications, and are not limited. The shape of the member to be compressed of the present disclosure may be, for example, annular. The member to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. Due to that the members to be compressed of the present disclosure has excellent water vapor low permeability, hardly make fluorine ions to dissolve out in an electrolytic solution, the members are especially suitable as members used in a state of contacting with a non-aqueous electrolyte in the non-aqueous electrolyte batteries. That is, the members to be compressed of the present disclosure may also be ones having a liquid-contact surface with a non-aqueous electrolyte in the non-aqueous electrolyte batteries.

The members to be compressed of the present disclosure hardly make fluorine ions to dissolve out in non-aqueous electrolytes. Therefore, by using the members to be compressed of the present disclosure, the rise in the fluorine ion concentration in the non-aqueous electrolytes can be suppressed. Consequently, by using the members to be compressed of the present disclosure, the generation of gases such as HF in the non-aqueous electrolytes can be suppressed, and the deterioration and the shortening of the service life of the battery performance of the non-aqueous electrolyte batteries can be suppressed.

From the viewpoint that the members to be compressed of the present disclosure can more suppress the generation of gases such as HF in the non-aqueous electrolytes, and can more suppress the deterioration and the shortening of the service life of the battery performance of the non-aqueous electrolyte batteries, the amount of fluorine ions dissolving out to be detected in an electrolytic solution immersion test is, in terms of mass, preferably 1.0 ppm or smaller, more preferably 0.8 ppm or smaller, and still more preferably 0.7 ppm or smaller. The electrolytic solution immersion test can be carried out by preparing a test piece having a weight equivalent to 10 sheets of a formed article (15 mm $\times$ 15 mm $\times$ 0.2 mm) using a member to be compressed, and putting a glass-made sample bottle in which the test piece and 2 g of dimethyl carbonate (DMC) have been charged in a thermostatic chamber at 80°C and allowing the sample bottle to stand for 144 hours.

The members to be compressed of the present disclosure hardly make water vapor to penetrate. Therefore, by using the members to be compressed of the present disclosure, the permeation of water vapor from the outside to secondary batteries can be suppressed. Consequently, by using the members to be compressed of the present disclosure, the deterioration of the battery performance and the shortening of the service life of the non-aqueous electrolyte batteries can be suppressed.

The water vapor permeability of the members to be compressed of the present disclosure is, from the viewpoint that the deterioration and the shortening of the service life of the battery performance of the non-aqueous electrolyte batteries can be more suppressed, preferably 18.0 g·cm/m$^2$ or lower, more preferably 17.5 g·cm/m$^2$ or lower, and still more preferably 17.0 g·cm/m$^2$ or lower. The water vapor permeability of the member to be compressed can be measured under the condition of a temperature of 95°C and for 30 days.

The non-aqueous electrolyte batteries are not limited as long as being batteries having a non-aqueous electrolyte, and examples include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, γ-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, and may be LiClO$_4$, LiAsF$_6$, LiPF$_6$, LiBF$_4$, LiCl, LiBr, CH$_3$SO$_3$Li, CF$_3$SO$_3$Li, cesium carbonate and the like.

The members to be compressed of the present disclosure can suitably be utilized, for example, as sealing members such as sealing gaskets or sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

Due to that the members to be compressed of the present disclosure hardly make fluorine ions to dissolve out in an electrolytic solution, the members to be compressed can suitably be used as sealing members for a non-aqueous electrolyte batteries or insulating members for non-aqueous electrolyte batteries. Further, the members to be compressed of the present disclosure, due to containing the above copolymer, have excellent insulating property. Therefore, in the case of using the members to be compressed of the present disclosure as insulating members, the members firmly adhere to two or more electrically conductive members and prevent short circuit over a long term.

The copolymer of the present disclosure hardly corrodes a core wire to be coated. Moreover, from the viewpoint that a coating layer having a uniform thickness can be formed on a core wire having an extremely large diameter by forming the copolymer of the present disclosure by extrusion forming, the copolymer of the present disclosure can suitably be used as a material for forming an electric wire coating. Accordingly, due to that the coated electric wire provided with a coating layer containing the copolymer of the present disclosure hardly corrodes the core wire, and the outer diameter is barely varied, the copolymer has excellent electrical property.

In an attempt to form an extremely thick coating layer having a uniform thickness on a core wire having an extremely large diameter, it takes time for a molten coating layer to solidify, also the weight of the coating layer is large, and therefore the use of a conventional copolymer is problematic in that the coating layer deforms under its own weight before it solidifies, and that it is difficult to form a coating layer having a uniform thickness. By using the copolymer of the present disclosure, an extremely thick coating layer having a uniform thickness can be formed on a core wire having an extremely large diameter.

The coated electric wire has a core wire, and the coating layer installed on the periphery of the core wire and containing the copolymer of the present disclosure. For example, an extrusion formed article made by melt extruding the copolymer of the present disclosure on a core wire can be made into the coating layer. The coated electric wires are suitable to LAN cables (Ethernet cables), high-frequency transmission cables, flat cables, heat-resistant cables and the like, and among these, suitable to transmission cables such as LAN cables (Ethernet cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to specific examples of the core wire, for example, AWG (American Wire Gauge)-46 (solid copper wire of 40 μm in diameter), AWG-26 (solid copper wire of 404 μm in diameter), AWG-24 (solid copper wire of 510 μm in diameter), and AWG-22 (solid copper wire of 635 μm in diameter) may be used.

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferable 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state on the core wire to thereby form the coating layer.

In formation of a coating layer, by heating the copolymer and introducing a gas in the copolymer in a molten state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a molten state.

Also, the copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

The copolymer of the present disclosure can be formed by injection molding to obtain a visually attractive sheet. The formed article containing the copolymer of the present disclosure has an extremely small haze value, has extremely good abrasion resistance, has excellent 100°C mechanical strength, carbon dioxide low permeability, chemical solution low permeability, 110°C high-temperature rigidity, and non-stickiness, is also hardly damaged or deteriorated even when repeatedly receiving tensile load, has sufficient water vapor low permeability, and hardly makes fluorine ions to dissolve out in an electrolytic solution. Accordingly, the formed article containing the copolymer of the present disclosure can suitably be utilized as a film or a sheet.

In particular, the film of the present disclosure has excellent non-stickiness. Accordingly, even when the film of the present disclosure and a resin such as epoxy resin, a toner or the like are heat pressed, they do not adhere to each other, and the resin, toner, or the like can be peeled from the film.

The film of the present disclosure is useful as a release film. The release films can be produced by forming the copolymer of the present disclosure by melt extrusion, calendering, press molding, casting or the like. From the viewpoint that uniform thin films can be obtained, the release films can be produced by melt extrusion.

The film of the present disclosure can be applied to the surface of rolls used in OA devices. The copolymer of the present disclosure is formed into required shapes, such as sheets, films or tubes, by extrusion forming, compression molding, press molding or the like, and can be used as surface materials of OA device rolls, OA device belts and the like. Thin-wall tubes and films can be produced particularly by a melt extrusion forming method.

Due to that the formed article containing the copolymer of the present disclosure has an extremely small haze value, has extremely good abrasion resistance, has excellent 100°C mechanical strength, carbon dioxide low permeability, chemical solution low permeability, 110°C high-temperature rigidity, and non-stickiness, is also hardly damaged or deteriorated even when repeatedly receiving tensile load, has sufficient water vapor low permeability, hardly makes fluorine ions to dissolve out in an electrolytic solution, the formed article can suitably be utilized as a bottle or a tube. The bottle or the tube of the present disclosure enables the contents to be visually checked easily, and is hardly damaged during use.

So far, embodiments have been described, but it is to be understood that various changes and modifications of patterns and details may be made without departing from the subject matter and the scope of the claims.

EXAMPLES

The embodiments of the present disclosure will be described by way of Examples as follows, but the present disclosure is not limited only to these Examples.

Each numerical value in Examples was measured by the following methods.

(Content of monomer unit)

The content of each monomer unit was measured by an NMR analyzer (for example, manufactured by Bruker BioSpin GmbH, AVANCE 300 high-temperature probe).

(Melt flow rate (MFR))

The polymer was made to flow out from a nozzle having an inner diameter of 2.1 mm and a length of 8 mm at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was molded by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the sample was calculated according to the following formula (A).

$$N = I \times K/t \cdots (A)$$

I: absorbance
K: correction factor
t: thickness of film (mm)

For reference, the absorption frequency, the molar absorption coefficient and the correction factor for the functional groups in the present disclosure are shown in Table 2. The molar absorption coefficients are those determined from FT-IR measurement data of low molecular model compounds.

[Table 2]

Table 2

| Functional Group | Absorption Frequency (cm⁻¹) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |

(continued)

| Functional Group | Absorption Frequency (cm$^{-1}$) | Molar Extinction Coefficient (l/cm/mol) | Correction Factor | Model Compound |
|---|---|---|---|---|
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation), and the melting point was determined from a melting curve peak observed in the second temperature raising step.

Example 1

26.6 L of pure water was charged in a 174 L-volume autoclave; nitrogen replacement was sufficiently carried out; thereafter, 30.4 kg of perfluorocyclobutane, 1.96 kg of perfluoro(propyl vinyl ether) (PPVE), and 0.11 kg of methanol were charged; and the temperature in the system was held at 35°C and the stirring speed was held at 200 rpm. Then, tetrafluoroethylene (TFE) was introduced under pressure up to 0.58 MPa, and thereafter 0.010 kg of a 50% methanol solution of di-n-propyl peroxydicarbonate was charged to initiate polymerization. Since the pressure in the system decreased along with the progress of the polymerization, TFE was continuously supplied to make the pressure constant, and 0.064 kg of PPVE was added for every 1 kg of TFE supplied and the polymerization was continued for 7 hours. TFE was released to return the pressure in the autoclave to the atmospheric pressure, and thereafter, an obtained reaction product was washed with water and dried to thereby obtain 15 kg of a powder.

The obtained powder was melt extruded at 360°C by a screw extruder (trade name: PCM46, manufactured by Ikegai Corp) to thereby obtain pellets of a TFE/PPVE copolymer. The PPVE content of the obtained pellets was measured by the method described above. The results are shown in Table 3.

The obtained pellets were put in a vacuum vibration-type reactor VVD-30 (manufactured by OKAWARA MFG. CO., LTD.), and heated to 210°C. After vacuumizing, F$_2$ gas diluted to 20% by volume with N$_2$ gas was introduced to the atmospheric pressure. 0.5 hour after the F$_2$ gas introduction, vacuumizing was once carried out and F$_2$ gas was again introduced. Further, 0.5 hour thereafter, vacuumizing was again carried out and F$_2$ gas was again introduced. Thereafter, while the above operation of the F$_2$ gas introduction and the vacuumizing was carried out once every 1 hour, the reaction was carried out at a temperature of 210°C for 10 hours. After the reaction was finished, the reactor interior was replaced sufficiently by N$_2$ gas to finish the fluorination reaction. By using the fluorinated pellets, the above physical properties were measured by the methods described above. The results are shown in Table 3.

Example 2

Fluorinated pellets were obtained as in Example 1, except for changing the charged amount of PPVE to 2.04 kg, changing the charged amount of methanol to 0.15 kg,, adding 0.066 kg of PPVE for every 1 kg of TFE supplied, changing the raised temperature of the vacuum vibration-type reactor to 170°C, and changing the reaction condition to at 170°C and for 5 hours. The results are shown in Table 3.

Example 3

Fluorinated pellets were obtained as in Example 1, except for changing the charged amount of PPVE to 2.12 kg, changing the charged amount of methanol to 0.18 kg, adding 0.068 kg of PPVE for every 1 kg of TFE supplied, and changing the polymerization time to 7.5 hours. The results are shown in Table 3.

Example 4

Fluorinated pellets were obtained as in Example 1, except for changing the charged amount of PPVE to 2.20 kg, changing the charged amount of methanol to 0.21 kg, adding 0.071 kg of PPVE for every 1 kg of TFE supplied, and changing the polymerization time to 7.5 hours. The results are shown in Table 3.

Example 5

Fluorinated pellets were obtained as in Example 1, except for changing the charged amount of PPVE to 2.20 kg, changing the charged amount of methanol to 0.23 kg, adding 0.071 kg of PPVE for every 1 kg of TFE supplied, and changing the polymerization time to 7.5 hours. The results are shown in Table 3.

Comparative Example 1

Fluorinated pellets were obtained as in Example 1, except for changing the charged amount of PPVE to 1.76 kg, changing the charged amount of methanol to 0.21 kg, and adding 0.058 kg of PPVE for every 1 kg of TFE supplied. The results are shown in Table 3.

Comparative Example 2

49.0 L of pure water was charged in a 174 L-volume; nitrogen replacement was sufficiently carried out; thereafter, 40.7 kg of perfluorocyclobutane, 2.58 kg of perfluoro(propyl vinyl ether) (PPVE) and 1.75 kg of methanol were charged; and the temperature in the system was held at 35°C and the stirring speed was held at 200 rpm. Then, tetrafluoroethylene (TFE) was introduced under pressure up to 0.64 MPa, and thereafter 0.041 kg of a 50% methanol solution of di-n-propyl peroxydicarbonate was charged to initiate polymerization. Since the pressure in the system decreased along with the progress of the polymerization, TFE was continuously supplied to make the pressure constant, and 0.071 kg of PPVE was added for every 1 kg of TFE supplied and the polymerization was continued for 18.5 hours. TFE was released to return the pressure in the autoclave to the atmospheric pressure, and thereafter, an obtained reaction product was washed with water and dried to thereby obtain 30 kg of a powder.
The obtained powder was melt extruded at 360°C by a screw extruder (trade name: PCM46, manufactured by Ikegai Corp) to thereby obtain pellets of a TFE/PPVE copolymer. The PPVE content of the obtained pellets was measured by the method described above. The results are shown in Table 3.
The obtained pellets were subjected to fluorination treatment as in Example 1 to thereby obtain fluorinated pellets. By using the fluorinated pellets, the above physical properties were measured by the methods described above. The results are shown in Table 3.

Comparative Example 3

Fluorinated pellets were obtained as in Example 1, except for changing the charged amount of PPVE to 2.12 kg, changing the charged amount of methanol to 0.03 kg, adding 0.068 kg of PPVE for every 1 kg of TFE supplied, and changing the polymerization time to 7 hours. The results are shown in Table 3.

Comparative Example 4

Non-fluorinated pellets were obtained as in Example 1, except for changing the charged amount of methanol to 0.14 kg. The results are shown in Table 3.

Comparative Example 5

51.8 L of pure water was charged in a 174 L-volume autoclave; nitrogen replacement was sufficiently carried out; thereafter, 40.9 kg of perfluorocyclobutane, 2.88 kg of perfluoro(propyl vinyl ether) (PPVE) and 1.56 kg of methanol were charged; and the temperature in the system was held at 35°C and the stirring speed was held at 200 rpm. Then, tetrafluoroethylene (TFE) was introduced under pressure up to 0.64 MPa, and thereafter 0.051 kg of a 50% methanol solution of di-n-propyl peroxydicarbonate was charged to initiate polymerization. Since the pressure in the system decreased along with the progress of the polymerization, TFE was continuously supplied to make the pressure constant, and 0.060 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 41.0 kg of a powder.

By using the obtained powder, the fluorination reaction was carried out as in Example 1 to thereby obtain fluorinated pellets. The results are shown in Table 3.

[Table 3]

Table 3

| | PPVE content (mol%) | MFR (g/10 min) | Number of functional groups (groups/C10$^6$) | Melting point (°C) |
|---|---|---|---|---|
| Example 1 | 2.34 | 5.0 | <6 | 301 |
| Example 2 | 2.42 | 6.5 | 26 | 300 |
| Example 3 | 2.50 | 7.5 | <6 | 299 |
| Example 4 | 2.59 | 9.0 | <6 | 298 |
| Example 5 | 2.59 | 10.0 | <6 | 298 |
| Comparative Example 1 | 2.14 | 6.4 | <6 | 302 |
| Comparative Example 2 | 2.59 | 17.3 | <6 | 299 |
| Comparative Example 3 | 2.51 | 2.2 | <6 | 298 |
| Comparative Example 4 | 2.34 | 6.0 | 159 | 301 |
| Comparative Example 5 | 2.22 | 12.5 | <6 | 302 |

The description "<6" in Table 3 means that the number of functional groups is less than 6.

Then, by using the obtained pellets, the following properties were evaluated. The results are shown in Table 4.

(Haze value)

By using the pellets and a heat press molding machine, a sheet of approximately 1.0 mm in thickness was prepared. The sheet was immersed in a quartz cell filled with pure water, and the haze value was measured according to JIS K 7136 using a haze meter (trade name: NDH 7000SP, manufactured by NIPPON DENSHOKU INDUSTRIES CO, LTD.).

(Tensile strength (TS) at 100°C)

Tensile strength at 100°C was measured according to ASTM D638.

(Water vapor permeability)

By using the pellets and a heat press molding machine, a sheet-shape test piece of approximately 0.2 mm in thickness was prepared. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the water, and held at a temperature of 95°C for 30 days, and thereafter, the test cup was taken out and allowed to stand at room temperature for 2 hours; thereafter, the amount of the mass lost was measured. The water vapor permeability (g·cm/m$^2$) was determined by the following formula.

$$\text{Water vapor permeability (g·cm/m}^2) = \text{the amount of the mass lost (g)} \times \text{the thickness of the sheet-shape test piece (cm)} / \text{the permeation area (m}^2)$$

(Injection moldability)

The copolymer was injection molded by using an injection molding machine (SE50EV-A, manufactured by Sumitomo Heavy Industries, Ltd.) set at a cylinder temperature of 395°C, a metal mold temperature of 220°C and an injection speed of 3 mm/s. As a metal mold, a metal mold (100 mm × 100 mm × 3 mmt, film gate, flow length: 10 mm) obtained by Cr-plating HPM38 was used. The obtained injection molded article was observed and evaluated according to the following criteria. The presence/absence of white turbidness was visually checked. The presence/absence of roughness of the surface was checked by touching the surface of the injection molded article.

3: The whole of the injection molded article was transparent and the whole surface was smooth.
2: White turbidness was observed within the region of 1 cm from the portion where the gate of the metal mold had been positioned, and the whole surface was smooth.
1: White turbidness was observed within the region of 1 cm from the portion where the gate of the metal mold had been positioned, and roughness was observed on the surface within the region of 1 cm of the portion where the gate of the metal mold had been positioned.
0: The copolymer was not filled in the whole of the metal mold and the molded article having a desired shape was not obtained.

(Electrolytic solution immersion test)

Approximately 5 g of the pellets was charged in a metal mold (inner diameter: 120 mm, height: 38 mm), and melted by hot plate press at 370°C for 20 min, thereafter, water-cooled with a pressure of 1 MPa (resin pressure) to thereby prepare a formed article of approximately 0.2 mm in thickness. Thereafter, by using the obtained formed article, test pieces of 15-mm square were prepared.

10 sheets of the obtained test pieces and 2 g of dimethyl carbonate (DMC) were put in a 20-mL glass sample bottle, and the cap of the sample bottle was closed. The sample bottle was put in a thermostatic chamber at 80°C, and allowed to stand for 144 hours to thereby immerse the test pieces in DMC. Thereafter, the sample bottle was taken out from the thermostatic chamber, and cooled to room temperature; then, the test pieces were taken out from the sample bottle. DMC remaining after the test pieces were taken out was allowed to be air-dried in the sample bottle put in a room controlled to be a temperature of 25°C for 24 hours; and 2 g of ultrapure water was added. The obtained aqueous solution was transferred to a measuring cell of an ion chromatograph system; and the amount of fluorine ions in the aqueous solution was measured by an ion chromatograph system (manufactured by Thermo Fisher Scientific Inc., Dionex ICS-2100).

(Ethyl acetate permeability)

By using the pellets and a heat press molding machine, a sheet-shape test piece of approximately 0.1 mm in thickness was prepared. 10 g of ethyl acetate was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with ethyl acetate, and held at a temperature of 60°C for 45 days, thereafter, the test cup was taken out and allowed to stand at room temperature for 1 hours; thereafter the amount of the mass lost was measured. Ethyl acetate permeability (g·cm/m$^2$) was determined by the following formula.

$$\text{Ethyl acetate } (\text{g·cm/m}^2) = \text{the amount of the mass lost (g)} \times \text{the thickness of sheet-shape test piece (cm) / the permeation area } (\text{m}^2)$$

(Rate of deflection at 110°C under load)

By using pellets and a heat press molding machine, a sheet of approximately 4.2 mm in thickness was prepared, and a test piece having 80 × 10 mm was cut out therefrom and heated in an electric furnace at 100°C for 20 hours. Except that the obtained test piece was used, a test was carried out according to the method described in JIS K-K 7191-1 with a heat distortion tester (manufactured by YASUDA SEIKI SEISAKUSHO, LTD.) under the condition of a test temperature of 30 to 150°C, a temperature-increasing rate of 120°C/hour, a bending stress of 1.8 MPa, and a flatwise method. The rate of deflection under load was determined by the following formula. A sheet, the rate of deflection at 110°C under load of which is small, has excellent rigidity at a high temperature of 110°C.

$$\text{Rate of deflection under load (\%)} = a2 \;/\; a1 \;\times\; 100$$

a1: test piece thickness before test (mm)
a2: amount of deflection at 110°C (mm)

(Tensile strength after 100,000 cycles)

Tensile strength after 100,000 cycles was measured using a fatigue tester MMT-250NV-10 manufactured by Shimadzu Corporation. By using the pellets and a heat press molding machine, a sheet of approximately 2.4 mm in thickness was prepared, and a dumbbell-shaped sample was prepared (thickness 2.4 mm, width 5.0 mm, length of measured portion 22 mm) by using an ASTM D1708 micro-dumbbell. The sample was attached to a measuring jig, and with the sample being attached, the measuring jig was put in a thermostatic chamber at 150°C. The sample was cyclically pulled in the uniaxial direction at a stroke of 0.2 mm and a frequency of 100 Hz, and the tensile strength for each pull (the tensile strength when the stroke was +0.2 mm) was measured. Tensile strength after 100,000 cycles was calculated from the measured values according to the following formula. In this example, the cross-sectional area of the sample is 12.0 mm$^2$.

$$\text{Tensile strength after 100,000 cycles (mN/mm}^2) =$$
$$\text{tensile strength (100,000 times) (mN) / the cross-sectional area}$$
$$\text{of the sample (mm}^2)$$

The tensile strength after 100,000 cycles is the ratio of the tensile strength when repetitive load was applied 100,000 times to the cross-sectional area of the sample. A sheet having a high tensile strength after 100,000 cycles maintains high tensile strength even after load is applied 100,000 times, and has excellent durability against repetitive load.

(Metal mold corrosion test)

20 g of the pellets was put in a glass container (50-ml screw vial); and a metal post (5-mm square shape, length of 30 mm) formed of HPM38 (Cr-plated) or HPM38 (Ni-plated) was hung in the glass container so as not to be in contact with the pellets. Then, the glass container was covered with a lid made of an aluminum foil. The glass container was put in an oven as is and heated at 380°C for 3 hours. Thereafter, the heated glass container was taken out from the oven, and cooled to room temperature; and the degree of corrosion of the surface of the metal post was visually observed. The degree of corrosion was judged based on the following criteria.

Good: no corrosion observed
Fair: corrosion slightly observed
Poor: corrosion observed

(Electric wire coating test)

Extrusion coating in the following coating thickness was carried out on a copper conductor of 1.00 mm in conductor diameter by a 30-mm$\varphi$ electric wire coating forming machine (manufactured by Tanabe Plastics Machinery Co., Ltd.), to thereby obtain a coated electric wire. The extrusion conditions for the electric wire coating were as follows.

a) Core conductor: 1.00 mm in conductor diameter
b) Coating thickness: 0.50 mm
c) Coated electric wire diameter: 2.00 mm
d) Electric wire take-over speed: 7 m/min
e) Extrusion condition:

· Cylinder screw diameter = 20 mm, a single-screw extruder of L/D = 22
· Die (inner diameter)/tip (outer diameter) = 30.0 mm/10.0 mm

Set temperature of extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C.

(Variation of outer diameter)

The outer diameter of the obtained coated electric wire was continuously measured for 1 hour using a diameter measuring head (ODAC 18XY manufactured by Zumbach). Among the measured outer diameter values, the outer diameter value that most deviated from the predetermined outer diameter value (2.00 mm) was rounded off to the third decimal place to determine a variation value of the outer diameter. The ratio (the outer diameter variation ratio) of the absolute value of the difference between the predetermined outer diameter (2.00 mm) and the outer diameter variation value to the predetermined outer diameter was calculated, and evaluated according to the following criteria.

$$\text{(Outer diameter variation ratio (\%))} = | \text{ (the outer diameter variation value)} - \text{ (the predetermined outer diameter) } | \; / \; \text{(the predetermined outer diameter)} \times 100$$

±1%: outer diameter variation ratio being 1% or less
±2%: outer diameter variation ratio being greater than 1% and 2% or less
Poor: outer diameter variation ratio being greater than 2%

(Core wire corrosion test)

The obtained coated electric wire was cut out into a length of 20 cm, and was allowed to stand in a thermohygrostatic chamber (Junior SD-01, manufactured by Formosa Advanced Technologies Co., Ltd.) at 60°C at a humidity of 95% for 2 weeks, then the coating layer was removed to expose the conductor, and the surface of the conductor was visually observed and evaluated according to the following criteria.

Good: no corrosion observed.
Poor: corrosion observed.

(Toner release test)

A φ14 mm extruder (manufactured by Imoto machinery Co., LTD.) and a T die were used to produce a film. The extrusion conditions were as follows.

a) Take-up speed: 1 m/min
b) Roll temperature: 120°C
c) Film width: 70 mm
d) Thickness: 0.10 mm
e) Extrusion condition:

· Cylinder screw diameter = 14 mm, a single-screw extruder of L/D = 20

Set temperature of the extruder: barrel section C-1 (330°C), barrel section C-2 (350°C), barrel section C-3 (370°C), T die section (380°C)
A test piece having 50 mm × 50 mm was cut out from the resulting film of 0.10 mm in thickness, the obtained test piece was laid on an SUS vat, 3 g of a black toner powder was spread in a circular shape having a diameter of approximately 30 mm onto the test piece, the lid of the vat was closed, and with the inside being an isolated space, the vat was placed in a thermostatic chamber heated to 160°C. After 10 minutes, the vat was taken out, and after standing to cool to room temperature, the test piece was taken out from the vat. Melt-solidified matter of the black toner was peeled off from the test piece, and the peeled surface of the test piece was visually observed and evaluated according to the following criteria.

Good: no black deposits observed on the peeled surface of the test piece
Poor: black deposits observed on the peeled surface of the test piece

(Abrasion test)

By using the pellets and a heat press molding machine, a sheet-shape test piece of approximately 0.2 mm in thickness was prepared, and a test piece having 10 cm × 10 cm was cut out therefrom. The prepared test piece was fixed on a test bench of a Taber abrasion tester (No. 101 Taber type abrasion tester with an option, manufactured by YASUDA SEIKI SEISAKUSHO, LTD.) and the abrasion test was carried out under the conditions of at a load of 500 g, using an abrasion wheel CS-10 (rotationally polished in 20 rotations with an abrasive paper #240) and at a rotation rate of 60 rpm by using the Taber abrasion tester. The weight of the test piece after 1,000 rotations was measured, and the same test piece was further subjected to the test of 10,000 rotations and thereafter, the weight thereof was measured. The abrasion loss was determined by the following formula.

$$\text{Abrasion loss (mg)} = M1 - M2$$

M1: weight of the test piece after 1,000 rotations (mg)
M2: weight of the test piece after 10,000 rotations (mg)

(Carbon dioxide permeability coefficient)

By using the pellets and a heat press molding machine, a sheet-shape test piece of approximately 0.1 mm in thickness was prepared. By using the obtained test piece, carbon dioxide permeability was measured with a differential pressure type gas permeation meter (L100-5000 gas permeability meter, manufactured by Systech Illinois) according to the method described in JIS K7126-1:2006. The carbon dioxide permeability value at a permeation area of 50.24 $cm^2$ at a test temperature of 70°C at a test humidity of 0% RH was obtained. The obtained carbon dioxide permeability and the test piece thickness were used to calculate the carbon dioxide permeability coefficient from the following equation.

$$\text{Carbon dioxide permeability coefficient } (cm^3 \cdot mm/(m^2 \cdot 24 \; h \cdot atm)) = GTR \times d$$

GTR: carbon dioxide permeability ($cm^3/(m^2 \cdot 24 \; h \cdot atm)$)
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with the DMC, and held at a temperature of 60°C for 30 days, and thereafter, the test cup was taken out and allowed to stand at room temperature for 1 hour; thereafter, the amount of the mass lost was measured. The DMC permeability ($g \cdot cm/m^2$) was determined by the following formula.

$$\text{Electrolytic solution permeability } (g \cdot cm/m^2) = \text{the amount of the mass lost (g)} \times \text{the thickness of the sheet-shape test piece (cm)} / \text{the permeation area } (m^2)$$

(Tube formability)

By using the pellets obtained in Examples, a tube of 10.0 mm in outer diameter and 1.0 mm in wall thickness was extruded by a <p30-mm extruder (manufactured by Tanabe Plastics Machinery Co., Ltd.).
The extrusion conditions were as follows.

a) Die inner diameter: 20 mm

b) Mandrel outer diameter: 13 mm
c) Sizing die inner diameter: 10.5 mm
d) Take-over speed: 0.4 m/min
e) Outer diameter: 10.0 mm
f) Wall thickness: 1.0 mm
g) Extrusion condition

· Cylinder screw diameter = 30 mm, a single-screw extruder of L/D = 22

Set temperature of the extruder: barrel section C-1 (330°C), barrel section C-2 (365°C), barrel section C-3 (380°C), head section H-1 (380°C), die section D-1 (390°C), die section D-2

(390°C)

The obtained tube was observed and evaluated according to the following criteria. The appearance of the tube was visually checked.

Good: good appearance
Poor: poor appearance, e.g., the cross section is not circular by being flat or having uneven thickness

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured by a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent (tan6) at 20°C at 6 GHz was determined.

[Table 4]

Table 4

| | Haze value (%) | 100°C Tensile strength (MPa) | Water vapor permeability (g·cm/m²) | injection moldability | Electrolytic solution immersion test – Amount of fluorine ions dissolving out (ppm by mass) | Metal mold corrosion test HPM38 (Cr-plated) | Metal mold corrosion test HPM38 (Ni-plated) | Electric wire coating property – Variation in outer diameter | Electric wire coating property – Core wire corrosion | Toner release test – Non-stickiness | Abrasion loss (mg) | $CO_2$ permeability coefficient (cm³·mm/(m²·24h·atm)) | Electrolytic solution permeability (g·cm/m²) | Ethyl acetate permeability (g·cm/m2) | Rate of deflection at 110°C under load (%) | Tensile strength after 100,000 cycles (mN/mm²) | Tube formability | Dielectric tangent |
|---|---|---|---|---|---|---|---|---|---|---|---|---|---|---|---|---|---|---|
| Example 1 | 7.0 | 22.5 | 16.8 | 1 | 0.6 | Good | Good | ±1% | Good | Good | 11.7 | 1950 | 8.2 | 6.6 | 78% | 169 | Good | 0.00042 |
| Example 2 | 7.3 | 22.0 | 16.4 | 2 | 0.6 | Good | Good | ±1% | Good | Good | 12.0 | 1960 | 8.1 | 6.6 | 78% | 160 | - | 0.00048 |
| Example 3 | 7.3 | 22.0 | 16.3 | 3 | 0.6 | Good | Good | ±1% | Good | Good | 12.0 | 1930 | 7.9 | 6.4 | 78% | 149 | - | 0.00042 |
| Example 4 | 7.2 | 21.5 | 16.5 | 3 | 0.6 | Good | Good | ±1% | Good | Good | 12.1 | 1940 | 7.8 | 6.3 | 78% | 135 | - | 0.00042 |
| Example 5 | 7.5 | 21.0 | 16.3 | 3 | 0.6 | Good | Good | ±2% | Good | Good | 12.3 | 1920 | 7.7 | 6.3 | 78% | 144 | - | 0.00042 |
| Comparative Example 1 | 8.3 | 21.5 | 14.7 | 2 | 0.6 | Good | Good | ±1% | Good | Good | 13.0 | 1820 | 7.8 | 6.6 | 75% | 251 | - | 0.00041 |
| Comparative Example 2 | 8.6 | 19.0 | 14.6 | 3 | 0.6 | Good | Good | Poor | Good | Good | 14.2 | 1815 | 7.2 | 6.2 | 76% | 188 | - | 0.00041 |
| Comparative Example 3 | 4.7 | 25.0 | 19.7 | 0 | 0.6 | Good | Good | Poor | Good | Good | 10.7 | 2165 | 9.0 | 6.8 | 84% | 52 | - | 0.00043 |

(continued)

| | Haze value (%) | 100°C Tensile strength (MPa) | Water vapor permeability (g·cm/m²) | injection moldability | Electrolytic solution immersion test — Amount of fluorine ions dissolving out (ppm by mass) | Metal mold corrosion test — HPM38 (Cr-plated) | Metal mold corrosion test — HPM38 (Ni-plated) | Electric wire coating property — Variation in outer diameter | Electric wire coating property — Core wire corrosion | Toner release test — Non-stickiness | Abrasion loss (mg) | $CO_2$ permeability coefficient (cm³·mm/(m²·24 h·atm)) | Electrolytic solution permeability (g·cm/m²) | Ethyl acetate permeability (g-cm/m2) | Rate of deflection at 110°C under load (%) | Tensile strength after 100,000 cycles (mN/mm²) | Tube formability | Dielectric tangent |
|---|---|---|---|---|---|---|---|---|---|---|---|---|---|---|---|---|---|---|
| Comparative Example 4 | 7.4 | 22.0 | 16.3 | 2 | 1.6 | Poor | Poor | ±1% | Poor | Poor | 12.1 | 2115 | 9.0 | 7.4 | 78% | 187 | - | 0.00078 |
| Comparative Example 5 | 9.4 | 17.5 | 13.5 | 3 | 0.6 | Good | Good | Poor | Good | Good | 15.0 | 1720 | 7.3 | 6.4 | 73% | 276 | - | 0.00040 |

**Claims**

1.  A copolymer, comprising tetrafluoroethylene unit and perfluoro(propyl vinyl ether) unit,

    wherein the copolymer has a content of perfluoro(propyl vinyl ether) unit of 2.26 to 2.75 mol% with respect to the whole of the monomer units,
    a melt flow rate at 372°C of 4.0 to 11.0 g/10 min, and
    the number of functional groups of 50 or less per $10^6$ main-chain carbon atoms.

2.  The copolymer according to claim 1, wherein the copolymer has a melt flow rate at 372°C of 5.0 to 10.0 g/10 min.

3.  An injection molded article, comprising the copolymer according to claim 1 or 2.

4.  A coated electric wire, comprising a coating layer comprising the copolymer according to claim 1 or 2.

5.  A formed article, comprising the copolymer according to claim 1 or 2, wherein the formed article is a filter housing, a film, a bottle, an electric wire coating, or a tube.

## INTERNATIONAL SEARCH REPORT

International application No.

**PCT/JP2022/003636**

### A. CLASSIFICATION OF SUBJECT MATTER

*C08F 8/00*(2006.01)i; *C08F 214/26*(2006.01)i; *H01B 7/02*(2006.01)i
FI:    C08F8/00; H01B7/02 Z; C08F214/26

According to International Patent Classification (IPC) or to both national classification and IPC

### B. FIELDS SEARCHED

Minimum documentation searched (classification system followed by classification symbols)

C08F

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 58-191127 A (E.I. DU PONT DE NEMOURS AND COMPANY) 08 November 1983 (1983-11-08)<br>claims, page 9, lower left column to lower right column, examples | 1-5 |
| X | JP 6-1902 A (E I DU PONT DE NEMOURS & CO.) 11 January 1994 (1994-01-11)<br>claims, paragraphs [0011], [0025], [0039], examples | 1-5 |
| X | JP 62-104822 A (E.I. DU PONT DE NEMOURS AND COMPANY) 15 May 1987 (1987-05-15)<br>claims, page 2, upper left column, page 3, upper left column, page 3, lower right column, examples | 1-5 |
| Y | | 1-5 |
| X | JP 2017-197690 A (DAIKIN INDUSTRIES, LTD.) 02 November 2017 (2017-11-02)<br>claims, paragraphs [0055], [0063], examples | 1-5 |
| Y | JP 2013-177574 A (DAIKIN INDUSTRIES, LTD.) 09 September 2013 (2013-09-09)<br>claims, paragraph [0040], synthesis example 1 | 1-5 |

☑ Further documents are listed in the continuation of Box C.  ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **05 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 299 602 A1

**INTERNATIONAL SEARCH REPORT**

International application No.

**PCT/JP2022/003636**

**C.    DOCUMENTS CONSIDERED TO BE RELEVANT**

| Category* | Citation of document, with indication, where appropriate, of the relevant passages | Relevant to claim No. |
|---|---|---|
| Y | WO 2008/032613 A1 (ASAHI GLASS CO., LTD.) 20 March 2008 (2008-03-20) claims, paragraphs [0024], [0038], examples 16, 17 | 1-5 |
| Y | JP 10-292054 A (E. I. DU PONT DE NEMOURS & CO.) 04 November 1998 (1998-11-04) claims, paragraph [0003] | 1-5 |
| Y | WO 2010/113864 A1 (DAIKIN INDUSTRIES, LTD.) 07 October 2010 (2010-10-07) claims, examples | 1-5 |

Form PCT/ISA/210 (second sheet) (January 2015)

26

**INTERNATIONAL SEARCH REPORT**
**Information on patent family members**

International application No.

**PCT/JP2022/003636**

| Patent document cited in search report | | | Publication date (day/month/year) | Patent family member(s) | | | Publication date (day/month/year) |
|---|---|---|---|---|---|---|---|
| JP | 58-191127 | A | 08 November 1983 | US | 4510300 | A | |
| | | | | claims, column 5, line 42 to column 6, line 23, examples | | | |
| | | | | EP | 91766 | A2 | |
| JP | 6-1902 | A | 11 January 1994 | US | 5000875 | A | |
| | | | | claims, column 2, line 64 to column 3, line 8, column 4, lines 45-61, column 6, lines 40-54, examples | | | |
| | | | | EP | 445523 | A2 | |
| | | | | EP | 312077 | A1 | |
| | | | | KR | 10-1991-0021440 | A | |
| JP | 62-104822 | A | 15 May 1987 | US | 4743658 | A | |
| | | | | claims, column 1, lines 12-20, column 2, lines 44-49, column 3, lines 36-62, eExamples | | | |
| | | | | EP | 220910 | A2 | |
| JP | 2017-197690 | A | 02 November 2017 | (Family: none) | | | |
| JP | 2013-177574 | A | 09 September 2013 | CN | 103946250 | A | |
| | | | | KR | 10-2014-0117544 | A | |
| WO | 2008/032613 | A1 | 20 March 2008 | US | 2009/0176952 | A1 | |
| | | | | claims, paragraphs [0050]-[0052], [0083], examples 16, 17 | | | |
| | | | | EP | 2058341 | A1 | |
| | | | | CN | 101511887 | A | |
| JP | 10-292054 | A | 04 November 1998 | US | 6689833 | B1 | |
| | | | | claims, column 1, lines 25-35 | | | |
| | | | | EP | 870792 | A1 | |
| | | | | CN | 1199062 | A | |
| WO | 2010/113864 | A1 | 07 October 2010 | US | 2012/0035329 | A1 | |
| | | | | claims, examples | | | |
| | | | | EP | 2418227 | A1 | |
| | | | | CN | 102365299 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003048214 A